# DEMANDE DE BREVET EUROPEEN

(11) **EP 1 154 537 A2**
(43) Date de publication de la demande: **14.11.2001**
(21) Numéro de dépôt: 01201624.2
(22) Date de dépôt: 04.05.2001
(51) Int. Cl.: H02G 13/00

(54) **Installation de paratonnerres pour aérogénérateurs**

(30) Priorité: 09.05.2000 ES 200001162
(71) Demandeur: M. Torres Disenos Industriales, S.A., 31119 Torres de Elorz (Navarra) (ES)
(72) Inventeur: Hermoso Alameda, Blas, 31004 Pamplona - Navarra (ES); Garcia Sanz, Mario, 31620 Huarte Pamplona - Navarra (ES); Eizaguirre Gaztelumendi, Ignacio, 20002 San Sebastian - Guipuzcoa (ES); Fernandez Irisarri, José Angel, 31008 Pamplona (ES); Aguerri Perez, Carlos, Baranain - Navarra (ES)
(74) Mandataire: Picard, Jean-Claude Georges

(57) **Abrégé**

Installation de paratonnerres pour aérogénérateurs, qui comprend l'installation d'une calotte (2) en aluminium à l'extrémité de chaque pale (1) du rotor (11) de l'aérogénérateur et l'installation d'un profil (3) également en aluminium, sur le bord longitudinal de la pale (1), en ajoutant un conducteur (4) parallèle au mât (5) de la pale, lequel est relié par plusieurs connexions équipotentielles (6) au profil en aluminium (3), de sorte que ce profil (3) et ce conducteur (4) assurent de manière parallèle la dérivation de la foudre dans sa descente de décharge à terre à travers le corps de l'aérogénérateur et de la tour correspondante.

## Description

La présente invention se réfère une installation destinée à assurer une protection adéquate contre les décharges de la foudre dans les aérogénérateurs.

La hauteur de la construction des aérogénérateurs ainsi que l'emplacement de ces appareils dans des lieux particulièrement élevés et dégagés font que ces appareils sont particulièrement exposés aux décharges de la foudre.

Les décharges de la foudre, qui peuvent être cumulatives, donnent lieu à des intensités instantanées de courant très élevées, qu'il est pratiquement impossible de contrôler, c'est pourquoi il est nécessaire de réaliser une mise à la terre permettant d'éviter que ces intensités n'affectent les éléments fonctionnels des appareils, qui pourraient être gravement détériorés.

Il n'existe pas de normes applicables en la matière, car pour des structures de plus de 60 mètres de hauteur, il n'y a pas de normes établies, ce qui, ajouté aux particularités des éléments mobiles qui constituent les aérogénérateurs, crée des conditions très particulières pour y fixer une installation de paratonnerre, qui soit pratique et efficace.

Conformément à la présente invention, l'on propose l'installation de paratonnerres présentant des caractéristiques constructives et fonctionnelles parfaitement adaptées à cette application pour les aérogénérateurs.

Selon cette installation, préconisée à l'extrémité des pales du rotor de l'aérogénérateur, on installe une calotte en aluminium, tandis que sur le bord de la pale est installé un profil en aluminium, en établissant ainsi une connexion équipotentielle entre la calotte de l'extrémité et le profil du bord au moyen d'un câble parallèle au mât de la pale et des jonctions transversales équidistantes depuis ce câble jusqu'au profil du bord, ces jonctions étant en outre fixées au mât de la pale par des brides conductrices.

Depuis cette connexion équipotentielle disposée sur chaque pale, on établit alors une connexion jusqu'à une structure fixe du corps de l'aérogénérateur, cette connexion étant réalisée par des moyens permettant la rotation du rotor et l'orientation des pales tout en maintenant la connexion.

Et d'autre part, depuis la structure fixe du corps de l'aérogénérateur, on établit une connexion de mise à la terre, qui est installée à l'extérieur de la tour et le long de la tour elle-même, évitant ainsi que l'induction des décharges endommage l'intérieur de la tour et présente un danger pour les personnes pouvant se trouver à l'intérieur de celle-ci et interférer sur les câbles de puissance et de signaux qui sont installés à l'intérieur de ladite tour.

La connexion de mise à la terre est en outre effectuée entre le corps de l'aérogénérateur et la tour, au moyen de systèmes permettant la rotation du corps sur la tour tout en maintenant la connexion et sans que le passage du courant n'affecte les roulements de rotation, en évitant alors que ceux-ci soient détériorés.

On obtient ainsi une installation de paratonnerre totalement efficace pour conduire les décharges de la foudre depuis les pales de l'aérogénérateur jusqu'à la terre, en évitant les effets préjudiciables aux éléments constitutifs de l'aérogénérateur et sans aucunement en affecter le fonctionnement.

C'est pourquoi cette installation, objet de l'invention, présente sans aucun doute des caractéristiques très avantageuses, dont le fonctionnement est autonome et doit être privilégié quant à sa fonction de paratonnerre pour les aérogénérateurs.

La figure 1 montre schématiquement la partie de l'installation préconisée, correspondant à la connexion équipotentielle sur une pale de l'aérogénérateur.

La figure 2 est un détail agrandi, en section transversale, de la disposition de l'une des jonctions transversales de la connexion équipotentielle sur la pale de l'aérogénérateur.

La figure 3 est un détail agrandi de la jonction entre la connexion équipotentielle de la pale et la structure fixe du corps de l'aérogénérateur, selon une réalisation de cette jonction avec des frotteurs coulissants.

La figure 4 est un schéma de l'influence magnétique d'une descente de décharge à la terre à l'intérieur de la tour de l'aérogénérateur.

La figure 5 est un schéma de l'influence magnétique d'une descente de mise à la terre à l'extérieur de la tour de l'aérogénérateur.

La figure 6 est un détail schématique de la connexion entre le corps de l'aérogénérateur et la tour pour la descente de décharge à la terre.

La figure 7 est un détail schématique en plan de la répartition des frotteurs de connexion entre le corps de l'aérogénérateur et la tour.

La figure 8 est un détail en coupe latérale d'un frotteur de cette connexion entre le corps de l'aérogénérateur et la tour.

La figure 9 est un détail en plan de l'enveloppe magnétique d'un frotteur de connexion entre le corps de l'aérogénérateur et la tour.

L'invention se réfère à une installation de paratonnerre pour les aérogénérateurs, selon laquelle sur chaque pale (1) de l'aérogénérateur, on installe une calotte (2) en aluminium, tandis que sur le bord longitudinal de la partie étroite de la pale, on installe un profil (3) également en aluminium.

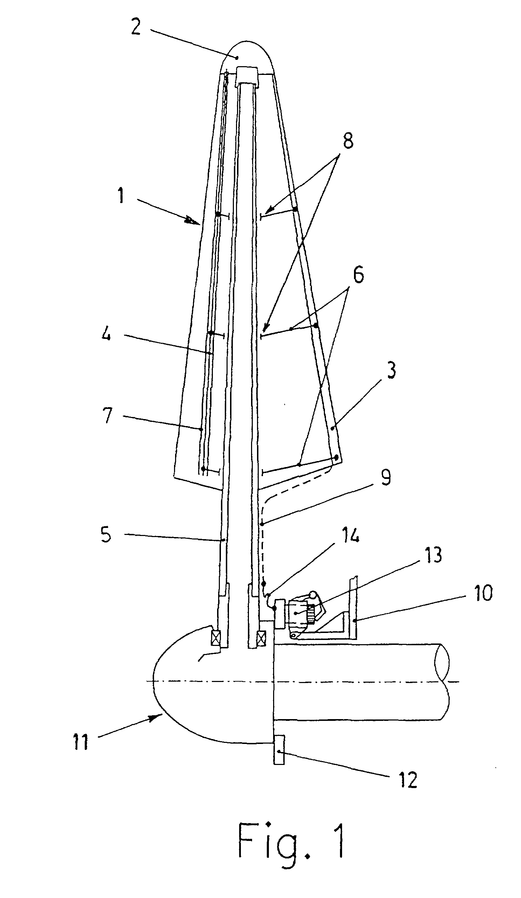

Entre la calotte (2) et le profil (3), on établit à l'intérieur de la pale (1), une connexion équipotentielle, au moyen d'un câble (4) qui part de la calotte (2) et se déroule parallèlement au mât (5) de la pale et grâce à des jonctions (6) équidistantes placées transversalement entre ce câble (4) et le profil (3), suivant la figure 1.

Le câble (4) est monté dans une isolation ignifuge (7), ce qui évite la présence d'humidité à l'extérieur de ce câble (4) et élimine le risque de vaporisations instantanées superficielles, avec effet d'explosion, qui peuvent entraîner la rupture de la pale (1) en raison des températures élevées produites par le courant de grande intensité engendré par les décharges de la foudre.

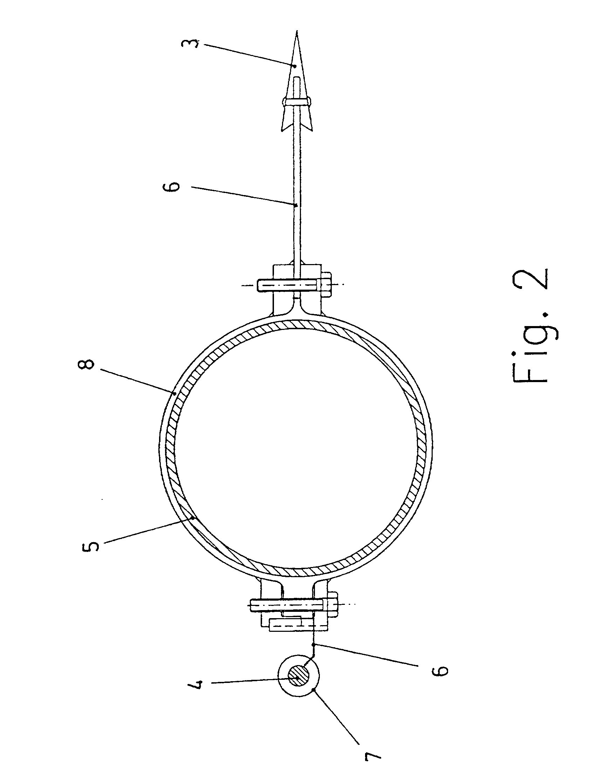

Les jonctions transversales (6) sont fixées au moyen de brides conductrices (8) sur le mât (5) de la pale (1), comme représenté sur la figure 2, ce qui évite que l'influence des décharges de la foudre génère un courant circulant le long du mât (5) qui est en fibre de carbone, car tout courant de cette nature est dérivé par les brides (8) et les jonctions (6), réalisées en aluminium, qui sont beaucoup plus conductrices.

À partir de la connexion équipotentielle réalisée sur chaque pale (1), on établit alors une jonction conductrice, au moyen d'un câble (9), avec une structure (10) fixe sur le corps de l'aérogénérateur et qui sert de bouclier protecteur de l'alternateur correspondant.

La connexion entre le câble (9) et la structure fixe (10) doit permettre la libre rotation du rotor (11) porteur des pales (1), pour assurer le fonctionnement de l'aérogénérateur, en installant à cet effet un anneau en acier (12) fixe sur le rotor (11), tandis que sur la structure fixe (10), sont montés des porte-balais (13) disposés en rond, chacun des porte-balais grâce à un balai qui y est placé établit un contact coulissant sur l'anneau (12), établissant ainsi le contact.

Les pales (1), quant à elles, sont orientables grâce au rayon de rotation du mât (5) sur son ancrage, et pour permettre ce mouvement entre le câble (9) et l'anneau (12), on établit une liaison avec le jeu nécessaire correspondant.

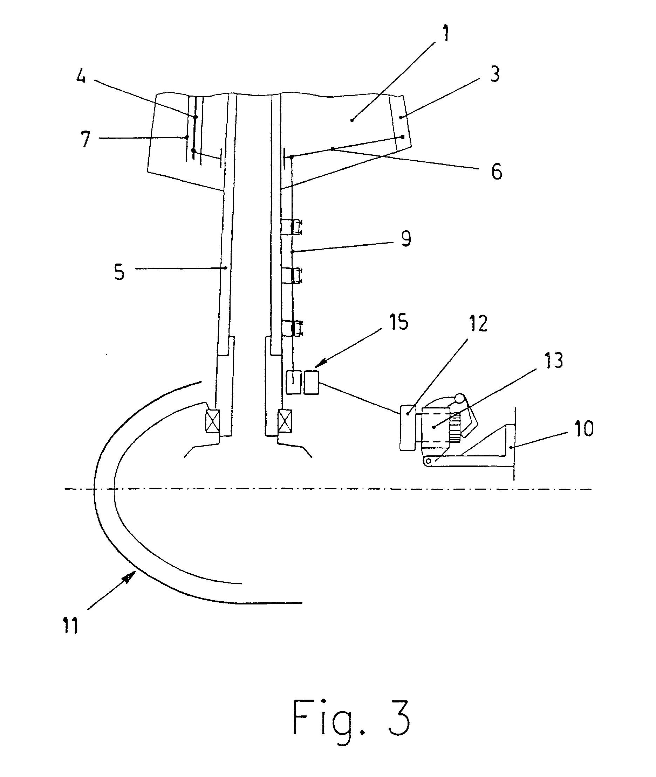

Cette liaison avec jeu peut être réalisée au moyen d'une tresse flexible (14) comme sur la figure 1, ou bien par un contact coulissant (15) grâce à un frotteur à ressort de type balai, comme représenté sur la figure 3. Le câble (9) est de préférence installé en descente directe depuis la jonction transversale inférieure (6) de la connexion équipotentielle sur la pale (1), comme on peut le remarquer sur cette figure 3, en évitant ainsi le surdimensionnement inutile de ce câble (9), ainsi que des angles d'installation non justifiés de celui-ci.

Depuis le corps de l'aérogénérateur, l'installation du paratonnerre se poursuit avec une dérivation à la terre jusqu'à la base de la tour (16) correspondante.

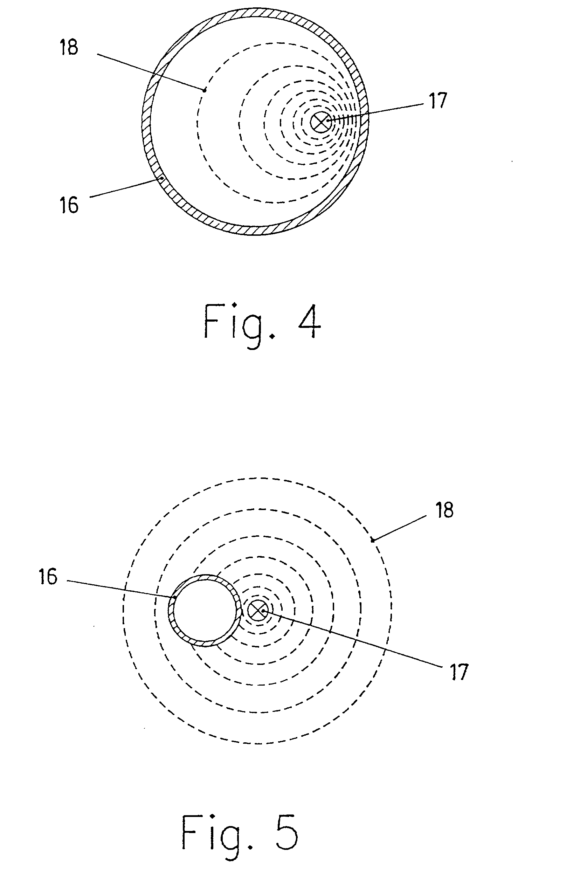

Étant donné la haute intensité du courant généré par les décharges de la foudre, dont l'effet de descente à la terre crée une induction qui affecte l'environnement, de sorte que, comme l'illustre la figure 4, si la descente à la terre (17) est réalisée à l'intérieur de la tour (16), l'induction (18) affecte l'intérieur de la tour (16), ce qui représente un danger pour les personnes pouvant se trouver à l'intérieur de la tour (16), et créer en outre une influence qui peut endommager les câbles de puissance et de signalisation de l'aérogénérateur, installés à l'intérieur de la tour (16).

Si, au contraire, comme cela est représenté sur la figure 5, la mise à la terre (17) est réalisée à l'extérieur de la tour (16), l'induction (18) n'affecte pas l'intérieur de celle-ci, car la paroi de la tour (16) recueille les lignes magnétiques, et fait office de bouclier, de sorte que l'induction (18) ne pénètre pas à l'intérieur et c'est pourquoi il n'y a aucun danger ni pour les personnes ni pour les câbles se trouvant à l'intérieur de la tour (16).

C'est pourquoi, la disposition de la figure 5 est préconisée de préférence, c'est-à-dire en réalisant la dérivation à la terre (17) par l'extérieur dans la zone de jonction du corps (19) à la tour (16) et en utilisant la tour (16) elle-même comme conducteur de la foudre à partir de cette zone de jonction jusqu'à la base inférieure.

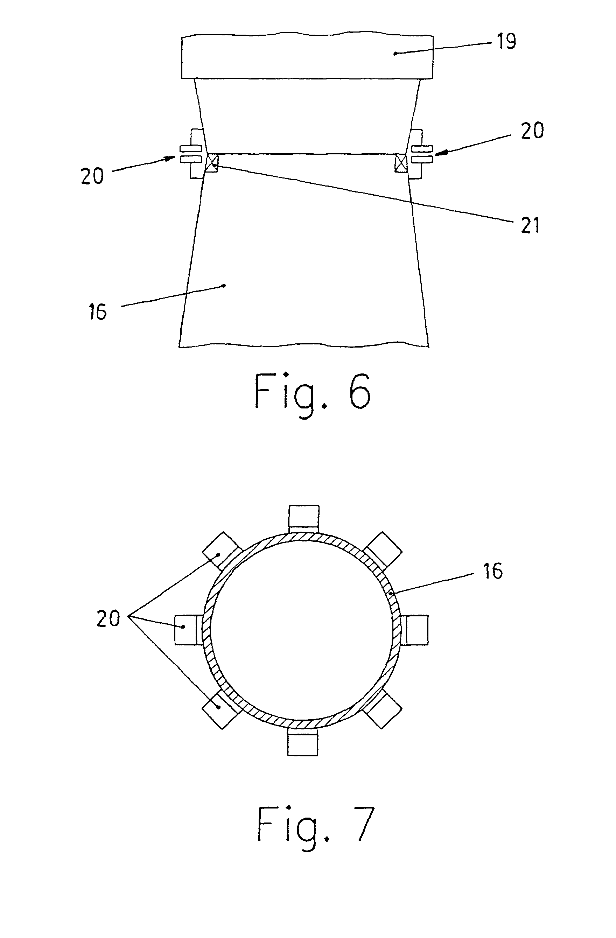

Le corps (19) des aérogénérateurs est installé en montage pivotant sur la colonne (16) correspondante, et pour conserver ce montage pivotant, la connexion pour la mise à la terre entre le corps (19) et la tour (16) s'effectue au moyen de frotteurs (20) à contact coulissant, comme cela est représenté sur la figure 6, grâce auxquels l'accouplement pivotant est mis en dérivation, permettant ainsi la rotation du corps (19) en gardant un contact permanent de la connexion, tout en évitant que le courant des décharges de la foudre mis à la terre n'affecte la couronne de rotation (21) et ne puisse la détériorer.

Autour de l'accouplement giratoire entre le corps (19) et la tour (16), une série de frotteurs de contact (20) sont montés, suivant une répartition régulière, ainsi que nous l'illustrons sur la figure 7, en installant un nombre suffisant de ces frotteurs (20) pour que le pontage de l'accouplement giratoire soit efficace et sans dérivation pour la couronne de rotation (21).

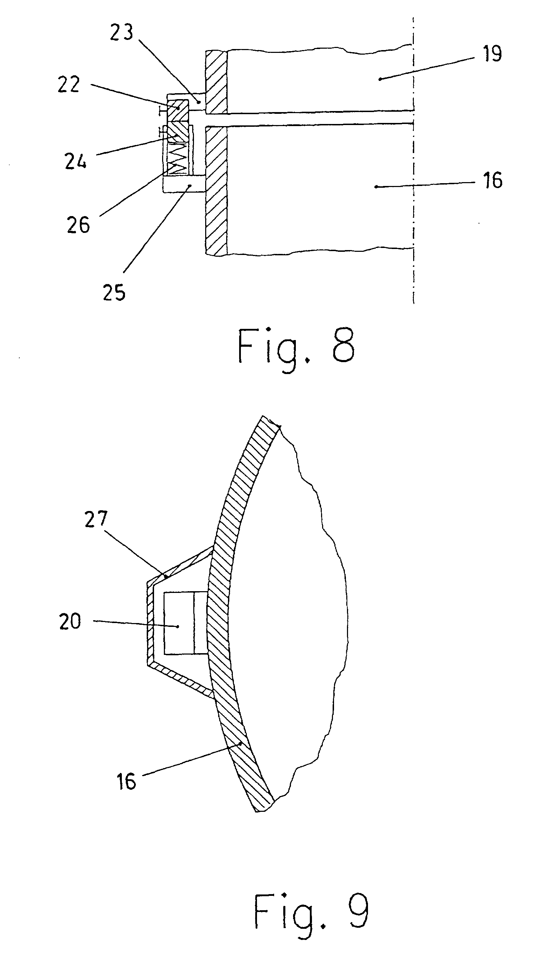

Selon une réalisation, les frotteurs (20) peuvent être composés, comme le représente la figure 8, par un anneau (22) en acier fixé par des supports (23) solidaires du corps (19) et s'appuyant sur celui-ci, des balais (24) placés sur des supports (25) solidaires de la tour (16), ces balais (24) étant pressés contre l'anneau (23) grâce à la pression de ressorts poussoirs correspondants (26).

Pour une protection appropriée des frotteurs (20), il est prévu que ceux-ci soient magnétiquement protégés par une enveloppe de protection (27), comme nous le voyons sur la figure 9.

## Revendications

1. Installation de paratonnerres pour aérogénérateurs, **caractérisée par le fait que** l'extrémité de chaque pale (1) du rotor (11) de l'aérogénérateur est équipé d'une calotte (2) en aluminium, tandis que sur le bord longitudinal de la pale est monté un profil (3) également en aluminium, en ajoutant également un conducteur (4) parallèle au mât (5) de la pale, relié par plusieurs connexions équipotentielles (6) au profil en aluminium (3), de sorte que le profil (3) et le conducteur parallèle (4) dérivent de manière parallèle la foudre par une descente de la décharge à la terre, à travers le corps (19) de l'aérogénérateur et de la tour (16) correspondante

2. Installation de paratonnerres pour aérogénérateurs, conforme en tous points à la première revendication, **caractérisée par le fait que** la jonction de la connexion équipotentielle de chaque pale (1) avec le corps (19) de l'aérogénérateur est réalisée au moyen d'un câble (9), lequel est monté sur une structure (10) fixe placée sur le corps (19), par l'intermédiaire d'un contact coulissant constitué d'un anneau en acier (12), sur lequel s'appuie un groupe de balais montés, coulissant sur leurs porte-balais respectifs (13) répartis sur la circonférence et fixés à la structure (10), tandis que le câble (9) est relié à l'anneau (12) par une tresse souple (14) ou par un contact (15) coulissant.

3. Installation de paratonnerre pour aérogénérateurs, en tous points conforme à la première revendication, **caractérisée par le fait que** la connexion de descente de l'installation entre le corps (19) de l'aérogénérateur et la tour (16) s'établit au moyen de frotteurs (20) de contact répartis sur le pourtour extérieur, et grâce auxquels est dérivé l'accouplement du montage pivotant entre le corps (19) et la tour (16), ces frotteurs (20) étant recouverts d'une enveloppe (27) de protection.

4. Installation de paratonnerre pour aérogénérateurs, en tous points conforme à la première revendication, **caractérisée par le fait que** la mise à la terre depuis le corps (19) de l'aérogénérateur est réalisée au moyen d'une connexion (20) installée à l'extérieur de la tour (16).

5. Installation de paratonnerre pour aérogénérateurs, en tous points conforme à la première revendication, **caractérisée par le fait que** les connexions équipotentielles (6) entre le profil en aluminium (3) et le câble isolé (4) des pales (1), sont réalisées par fixation sur le mât (5) de la pale, grâce à des brides conductrices (8).

6. Installation de paratonnerre pour aérogénérateurs, en tous points conforme à la première revendication, **caractérisée par le fait que** le câble (4) de la connexion équipotentielle des pales (1) est installé avec une isolation par revêtement ignifuge (7).
